# EUROPÄISCHE PATENTSCHRIFT

(11) **EP 3 456 938 B1**
(45) Veröffentlichungstag und Bekanntmachung des Hinweises auf die Patenterteilung: **11.09.2019**
(21) Anmeldenummer: 18199824.6
(22) Anmeldetag: 04.10.2017
(51) Int. Cl.: F02B 75/04, F16K 31/06, F16C 7/06, F16C 23/10

(54) **PLEUEL FÜR EINE BRENNKRAFTMASCHINE MIT VARIABLER VERDICHTUNG**
CONNECTING ROD FOR A COMBUSTION ENGINE WITH VARIABLE COMPRESSION
BIELLE POUR UN MOTEUR À COMBUSTION INTERNE À COMPRESSION VARIABLE

(30) Priorität: 04.10.2016 DE 102016118757; 10.04.2017 DE 102017107702
(43) Veröffentlichungstag der Anmeldung: 20.03.2019
(62) Teilanmeldung aus: 17194671.8
(73) Patentinhaber: ECO Holding 1 GmbH, 97828 Marktheidenfeld (DE)
(72) Erfinder: Mudra, Alexander, 97828 Marktheidenfeld (DE); Schulze, Dietmar, 35516 Münzenberg (DE)

(56) Entgegenhaltungen:
- EP-A2- 1 382 807
- DE-A1- 19 819 619
- DE-A1-102015 100 662
- DE-A1-102015 103 205
- JP-A- 2007 321 953
- US-A1- 2008 230 452
- US-A1- 2013 341 544
- US-A1- 2015 233 481

## Beschreibung

### Technisches Gebiet

Die Erfindung betrifft ein Pleuel für eine Brennkraftmaschine mit variabler Verdichtung mit einer Exzenter-Verstelleinrichtung zur Verstellung einer effektiven Pleuelstangenlänge.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt.

Die in der Brennkraftmaschine befindliche Hydraulikflüssigkeit ist trotz bekannter Filtermaßnahmen immer wieder mit Schmutzpartikeln verunreinigt. Diese können die Funktionen der hydraulischen Komponenten des Pleuels beeinträchtigen.

Die DE 10 2015 103 205 A1 beschreibt eine Pleuelstange, bei der ein Filterelement ein Eindringen von Verunreinigungen über das Hydrauliköl ausgehend von der Kurbelwelle in die Hydraulikkammern verhindert. Dazu ist beispielsweise ein Filterelement in eine Hydraulikleitung der Kurbelwelle integriert. Weiter ist einem Rückschlagventil ein Filterelement zugeordnet, wobei in die Hydraulikkammern der Pleuelstange oder in die Hydraulikleitungen der Pleuelstange jeweils ein Filterelement integriert ist.

### Offenbarung der Erfindung

Eine Aufgabe der Erfindung ist es, ein Pleuel mit einem Umschaltventil zu schaffen, welches ein robustes Betriebsverhalten gegenüber Schmutzeintrag aufweist.

Die vorgenannte Aufgabe wird mit den Merkmalen des unabhängigen Anspruchs gelöst.

Günstige Ausgestaltungen und Vorteile der Erfindung ergeben sich aus den weiteren Ansprüchen, der Beschreibung und der Zeichnung.

Ein erfindungsgemäßes Pleuel für eine Brennkraftmaschine mit variabler Verdichtung mit einer Exzenter-Verstelleinrichtung zur Verstellung einer effektiven Pleuelstangenlänge umfasst ein günstiges Umschaltventil zum Steuern eines Hydraulikflüssigkeitsstroms des Pleuels Das Umschaltventil weist ein Ventilgehäuse auf, das einen ersten Arbeitsanschluss und einen zweiten Arbeitsanschluss sowie einen Versorgungsanschluss aufweist. Vorteilhafterweise kann wenigstens ein Filterelement im Bereich der Anschlüsse des Umschaltventils angeordnet sein.

In der Hydraulikflüssigkeit von Brennkraftmaschinen, insbesondere im Motoröl, können immer wieder Partikel und/oder Späne durch Abrieb der mechanischen Komponenten der Brennkraftmaschine, wie Zylinder, Kurbeltrieb, Kolben vorkommen. Das Umschaltventil kann deshalb wenigstens ein Filterelement im Bereich der Anschlüsse des Umschaltventils aufweisen, welches empfindliche hydraulische Komponenten wie Rückschlagventile und/oder mechanische oder hydraulische Schalter vor diesen Partikeln und/oder Spänen schützt, um eine sichere und langanhaltende Funktion der Komponenten zu gewährleisten.

Diese Funktion kann mittels Filtern oder Sieben realisiert werden, welche das aus der Lagerschale kommende Öl filtern und eventuelle Partikel daran hindern, zu den hydraulischen Komponenten zu gelangen. Dazu kann das Filterelement im Bereich wenigstens eines der Anschlüsse, also beispielsweise des ersten und zweiten Arbeitsanschlusses sowie des Versorgungsanschlusses des Umschaltventils angeordnet sein. Alternative Positionen für das Filterelement kann auch der äußere Umfang des Umschaltventils sein, so dass das Filterelement den äußeren Umfang des Umschaltventils umgibt.

Auf diese Weise kann vorteilhaft der Hydraulikfluss in Richtung Umschaltventil gefiltert werden, wodurch mögliche Partikel und/oder Späne daran gehindert werden, in das Umschaltventil zu gelangen.

Das Filterelement kann auch direkt in das Umschaltventil integriert sein. Auch dabei wird die Hydraulikflüssigkeit wirksam gefiltert und verhindert, dass das Umschaltventil in seiner Funktion beeinträchtigt werden kann. Ein wesentlicher Vorteil dabei ist, dass das Pleuel, in welchem das Umschaltventil eingesetzt ist, nicht geändert werden muss, so dass die Pleuelbearbeitung nicht aufwendiger wird.

Das Filterelement kann vorteilhaft als Sieb ausgebildet sein. Als Siebe können dabei beispielsweise ein umspritztes Drahtmaschengewebe, ein umspritztes, gelochtes Blechteil, ein gelochtes Blechteil oder auch ein tiefgezogenes Blechteil zum Einsatz kommen.

Erfindungsgemäße Filterelemente können vorteilhaft beispielsweise Papierfilter, Metallgewebefilter, Sinterbronze, Vliesmaterial, Kunststoffgewebe oder ähnliche Materialien umfassen.

Das Filterelement kann in dem Umschaltventil beispielsweise eingelegt, eingeclipst oder eingepresst angeordnet sein.

Das Filterelement kann vorteilhaft als Lebensdauerbauteil vorgesehen sein, braucht als während seines Filtereinsatzes nicht gewechselt werden.

Gemäß einer vorteilhaften Ausgestaltung können der erste Arbeitsanschluss, der zweite Arbeitsanschluss sowie der Versorgungsanschluss jeweils ein Filterelement aufweisen. Auf diese Weise kann möglicher Schmutz in der Hydraulikflüssigkeit wie Partikel oder Späne wirksam aus der Hydraulikflüssigkeit herausgefiltert werden. Wenn beide Arbeitsanschlüsse sowie der Versorgungsanschluss des Umschaltventils mit Filterelementen versehen sind, kann möglicher Schmutz mit großer Sicherheit von den empfindlichen Bauteilen des Umschaltventils, die mit sehr enge Toleranzen ausgelegt und gefertigt sind und deren Funktionsverhalten demzufolge empfindlich auf Schmutzpartikel reagieren könnte, ferngehalten werden.

Gemäß einer vorteilhaften Ausgestaltung kann das Umschaltventil als Hydraulikventil oder als mechanisches Umschaltventil ausgestaltet sein. Sowohl bei einem Hydraulikventil, welches mit der Hydraulikflüssigkeit gesteuert wird, als auch bei einem mechanischen Umschaltventil, welches mechanisch gesteuert wird, ist es von Vorteil, wenn mögliche Schmutzpartikel in der Hydraulikflüssigkeit herausgefiltert werden, da die Funktion beider Ausführungsformen durch Partikel auf Grund der engen Toleranzen der einzelnen Bauteile beeinträchtigt werden könnte.

Gemäß einer vorteilhaften Ausgestaltung können die Filterelemente in Ausnehmungen des Ventilgehäuses angeordnet sein. Dadurch kann die Außenkontur des Ventilgehäuses und damit des Umschaltventils gegenüber einer Ausführung ohne Filterelemente erhalten bleiben. Damit kann das Umschaltventil mit Filterelementen ohne weitere Änderungen an den vorgesehenen Einbauorten des Pleuels angeordnet werden. Auf diese Weise kann ein Pleuel vorteilhaft auch nachträglich mit einem Umschaltventil mit Filterelementen ausgestattet werden.

Gemäß einer vorteilhaften Ausgestaltung können die Filterelemente als Siebe ausgebildet sein. Siebe sind sehr wirksam, um gröbere Schmutzpartikel aus der Hydraulikflüssigkeit herauszufiltern. Siebe können günstig mit Maschenweiten über einen großen Bereich gefertigt werden und sind kostengünstig zu fertigen. Außerdem weisen sie auf Grund des Materials, da sie vorteilhaft aus metallischen oder Kunststoffwerkstoffen gefertigt sein können, eine hohe Lebensdauer auf. Siebe sind auch sehr robust im Einsatz unter rauen Umweltbedingungen.

Gemäß einer vorteilhaften Ausgestaltung können die Filterelemente als einen Außenumfang des Ventilgehäuses umgreifende Ringbänder ausgebildet sein. Damit lassen sich Arbeitsanschlüsse, bzw. Versorgungsanschlüsse, welche beispielsweise als Bohrungen auf dem Umfang des Ventilgehäuses ausgebildet sein können, wirksam mit jeweils einem Filterelement abgedeckt werden, so dass die Bohrungen durchströmende Hydraulikflüssigkeit wirksam auf Schmutzpartikel gefiltert werden kann. Auch lassen sich solche Ringbänder als Filterelemente günstig auf das Ventilgehäuse montieren. Ringbänder stellen so einen wirksamen Schutz des Umschaltventils gegen Partikel oder Spänen in der Hydraulikflüssigkeit dar.

Gemäß einer vorteilhaften Ausgestaltung können die Filterelemente in das Ventilgehäuse integriert sein. Wenn die Filterelemente integrierte Bestandteile des Ventilgehäuses sind, ist eine zuverlässige Montage der Filterelemente gewährleistet.

Bei einem günstigen Pleuel für eine Brennkraftmaschine mit variabler Verdichtung mit einer Exzenter-Verstelleinrichtung zur Verstellung einer effektiven Pleuelstangenlänge weist die Exzenter-Verstelleinrichtung zwei Zylinder als Stützkammern auf. Weiter sind sowohl jeweils ein Zulauf zum Zuführen von Hydraulikflüssigkeit in die Zylinder über eine Versorgungsleitung als auch jeweils ein Ablauf zum Abführen von Hydraulikflüssigkeit von den Zylindern vorgesehen. Das Pleuel umfasst ein Umschaltventil. Das Umschaltventil kann dabei wenigstens ein Filterelement im Bereich der Anschlüsse, insbesondere des ersten und zweiten Arbeitsanschlusses sowie des Versorgungsanschlusses des Umschaltventils, aufweisen.

Das Filterelement kann vorteilhaft im unmittelbaren Bereich der Anschlüsse des Umschaltventils angeordnet sein. Alternative Positionen für das Filterelement kann auch der äußere Umfang des Umschaltventils sein, so dass das Filterelement den äußeren Umfang des Umschaltventils umgibt.

Auf diese Weise kann vorteilhaft der Hydraulikfluss in Richtung Umschaltventil gefiltert werden, wodurch mögliche Partikel und/oder Späne daran gehindert werden, in das Umschaltventil zu gelangen.

Das Filterelement kann auch direkt in das Umschaltventil integriert sein. Auch dabei wird die Hydraulikflüssigkeit wirksam gefiltert und verhindert, dass das Umschaltventil in seiner Funktion beeinträchtigt werden kann. Ein wesentlicher Vorteil dabei ist, dass das Pleuel, in welchem das Umschaltventil eingesetzt ist, nicht geändert werden muss, so dass die Pleuelbearbeitung nicht aufwendiger wird.

Ein ringförmiges Sieb oder Filterelement kann auch vorteilhaft um das Umschaltventil in einer Schalterbohrung des Pleuels in Nuten oder Hinterschnitten des Pleuels angeordnet sein. Ein Vorteil dabei ist, dass der Hydraulikfluss in Richtung des Umschaltventils wirksam gefiltert werden kann.

Das Filterelement kann vorteilhaft als Sieb ausgebildet sein. Als Siebe können dabei beispielsweise ein umspritztes Drahtmaschengewebe, ein umspritztes, gelochtes Blechteil, ein gelochtes Blechteil oder auch ein tiefgezogenes Blechteil zum Einsatz kommen.

Erfindungsgemäße Filterelemente können vorteilhaft beispielsweise Papierfilter, Metallgewebefilter, Sinterbronze, Vliesmaterial, Kunststoffgewebe oder ähnliche Materialien umfassen.

Das Filterelement kann in dem Umschaltventil beispielsweise eingelegt, eingeclipst oder eingepresst angeordnet sein.

Gemäß einer vorteilhaften Ausgestaltung können die Filterelemente in Ausnehmungen einer Schalterbohrung des Pleuels angeordnet sein. Auf diese Weise kann ein übliches Umschaltventil ohne Änderungen am Umschaltventil oder am Pleuel in die Schalterbohrung eingesetzt werden, wodurch eine kostengünstige Lösung der Filterung der Hydraulikflüssigkeit umgesetzt werden kann.

Gemäß einer vorteilhaften Ausgestaltung kann in dem Zulauf wenigsten ein Rückschlagventil vorgesehen sein, wobei zwischen Zulauf und Anschluss des Rückschlagventils ein Filterelement angeordnet ist. Auf diese Weise kann das Rückschlagventil wirksam vor möglichen Funktionsstörungen durch Partikel oder Späne in der Hydraulikflüssigkeit geschützt werden.

Nach einem Aspekt der Erfindung wird ein Pleuel für eine Brennkraftmaschine mit variabler Verdichtung mit einem Pleuelkörper mit einem Umschaltventil und einer Exzenter-Verstelleinrichtung zur Verstellung einer effektiven Pleuelstangenlänge vorgeschlagen, wobei die Exzenter-Verstelleinrichtung zwei Zylinder als Stützkammern aufweist und wobei sowohl jeweils ein Zulauf zum Zuführen von Hydraulikflüssigkeit in die Zylinder über wenigstens eine mit einer Lagerschale des Pleuels verbundenen Versorgungsleitung als auch jeweils ein Ablauf zum Abführen von Hydraulikflüssigkeit von den Zylindern vorgesehen sind. Erfindungsgemäß ist zwischen dem Pleuelkörper und der Lagerschale wenigstens ein Filterelement angeordnet, oder zwischen dem Pleueldeckel und der Lagerschale ist wenigstens ein Filterelement angeordnet.

Das Filterelement kann vorteilhaft direkt in einer Pleuelstange integriert sein. Das Filterelement kann weiter, wie oben beschrieben, als Sieb ausgebildet sein. Durch die Anordnung zwischen Lagerschale und Pleuelkörper kann die Hydraulikflüssigkeit, die aus der Lagerschale nachgefördert wird, wirksam gefiltert werden, so dass mögliche Schmutzpartikel oder Abrieb der mechanischen Komponenten die Funktionen eines Umschaltventils und/oder von Rückschlagventilen nicht beeinträchtigen.

Befindet sich die Hydraulikflüssigkeitsversorgung im Pleueldeckel kann das Filterelement dementsprechend vorteilhaft zwischen Lagerschale und Pleueldeckel angeordnet sein.

Ein wesentlicher Vorteil dabei liegt darin, dass die aus der Lagerschale nachgeförderte Hydraulikflüssigkeit gefiltert wird und das gesamte hydraulische System dadurch vor von außen kommenden Partikeln geschützt wird. Auf diese Weise braucht die Anlagefläche der Lagerschale auch nicht weiter verändert werden, was vorteilhaft Strukturschwächungen der Anlagefläche, welche die mechanische Belastung der Lagerschale erhöhen könnten, vermeidet.

Gemäß einer vorteilhaften Ausgestaltung kann das Filterelement in einer Nut wenigstens auf einem Teil des Umfangs der Lagerschale angeordnet sein. Dadurch wird die Traglast der Lagerschale möglichst wenig beeinträchtigt, so dass das Pleuel mit seinem Hublagerauge in seiner ursprünglich ausgelegten Belastungsgrenze betreibbar bleibt.

Gemäß einer vorteilhaften Ausgestaltung kann das Filterelement in den Pleuelkörper integriert sein. Das Filterelement kann vorteilhaft auch direkt im Pleuel integriert sein. Wenn nur ein Versorgungsanschluss des Pleuels vorhanden ist, kann mit einem Filterelement die Hydraulikflüssigkeit wirksam gefiltert werden.

Zusätzlich oder alternativ weist das Pleuel für eine Brennkraftmaschine mit variabler Verdichtung einen Pleuelkörper, ein Umschaltventil und eine Exzenter-Verstelleinrichtung zur Verstellung einer effektiven Pleuelstangenlänge auf, wobei die Exzenter-Verstelleinrichtung zwei Zylinder als Stützkammern, aufweist und wobei sowohl jeweils ein Zulauf zum Zuführen von Hydraulikflüssigkeit in die Zylinder über eine mit einer Lagerschale des Pleuels verbundenen Versorgungsleitung als auch jeweils ein Ablauf zum Abführen von Hydraulikflüssigkeit von den Zylindern vorgesehen sind. Erfindungsgemäß sind Filterelemente in Versorgungsleitungen angeordnet, welche von der Lagerschale in Richtung Umschaltventil führen, d.h. die Lagerschale mit dem Umschaltventil verbinden. Insbesondere können die Filterelemente direkt in die Versorgungsleitung integriert sein.

Dadurch lässt sich die Hydraulikflüssigkeit wirksam filtern, bevor die Hydraulikflüssigkeit in empfindliche Komponenten wie das Umschaltventil und/oder Rückschlagventile gelangen kann. Auch wird Lagerschalenverschleiß durch Partikel und Späne wirksam vorgebeugt, da die Hydraulikflüssigkeit insgesamt durch die Filterelemente gefiltert wird, so dass mögliche Defekte durch verschmutzte Hydraulikflüssigkeit an Pleuel und/oder Brennkraftmaschine günstig vermieden werden können.

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein erfindungsgemäßes Pleuel mit einem Umschaltventil nach einem Ausführungsbeispiel der Erfindung in Draufsicht mit eingezeichneter Schnittebene A-A;
- Fig. 2: das Pleuel in dem Längsschnitt A-A in Fig. 1 mit dem eingezeichneten vergrößerten Ausschnitt Z;
- Fig. 3: das Umschaltventil aus Fig. 2 im vergrößerten Ausschnitt Z;
- Fig. 4: ein erfindungsgemäßes Pleuel mit einem Umschaltventil nach einem weiteren Ausführungsbeispiel der Erfindung in Draufsicht mit eingezeichneter Schnittebene A-A;
- Fig. 5: das Pleuel in dem Längsschnitt A-A in Fig. 4 mit dem eingezeichneten vergrößerten Ausschnitt Z;
- Fig. 6: das Umschaltventil aus Fig. 5 im vergrößerten Ausschnitt Z;
- Fig. 7: ein Pleuel nach einem weiteren Ausführungsbeispiel der Erfindung mit einem Filterelement zwischen Pleuelkörper und Lagerschale, in Seitenansicht mit eingezeichneter Schnittebene A-A;
- Fig. 8: das Pleuel in dem Längsschnitt A-A in Fig. 7 mit dem eingezeichneten vergrößerten Ausschnitt A;
- Fig. 9: das Pleuel aus Fig. 7 m vergrößerten Ausschnitt A;
- Fig. 10: ein Pleuel nach einem weiteren Ausführungsbeispiel der Erfindung mit Filterelementen in Versorgungsleitungen, in Seitenansicht mit eingezeichneter Schnittebene A-A;
- Fig. 11: das Pleuel in dem Längsschnitt A-A in Fig. 10 mit dem eingezeichneten vergrößerten Ausschnitt A;
- Fig. 12: das Pleuel aus Fig. 10 im vergrößerten Ausschnitt A;
- Fig. 13: ein Ausführungsbeispiel eines Filterelements des Pleuels aus Fig. 10.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

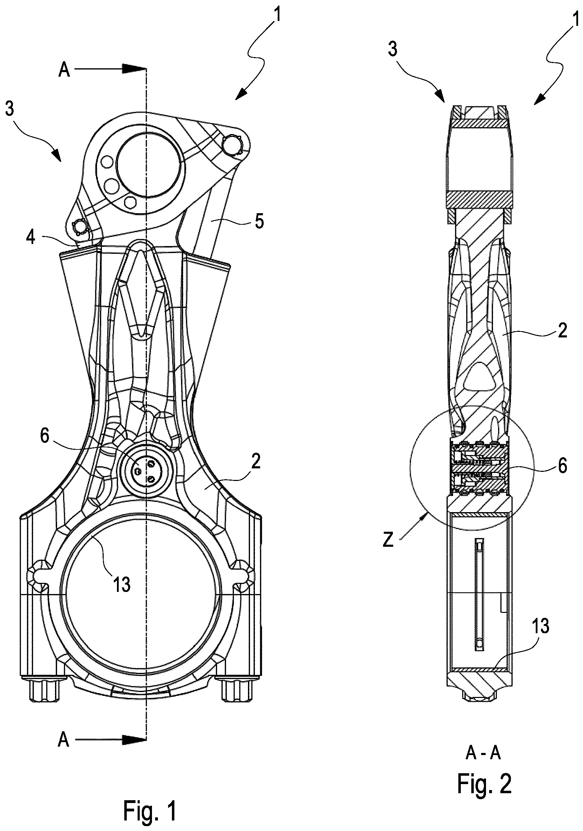

Den Figuren 1 bis 6 sind verschiedene Ansichten und Schnitte, bzw. vergrößerte Darstellungen von Ausführungsbeispielen eines Pleuels 1 mit einem Umschaltventil 6 zu entnehmen, bei denen nach einer Ausführung wenigstens ein Filterelement 14, 15, 16 im Bereich von Arbeits- und/oder Versorgungsanschlüssen 10, 11, 12 des Umschaltventils 6 vorgesehen ist.

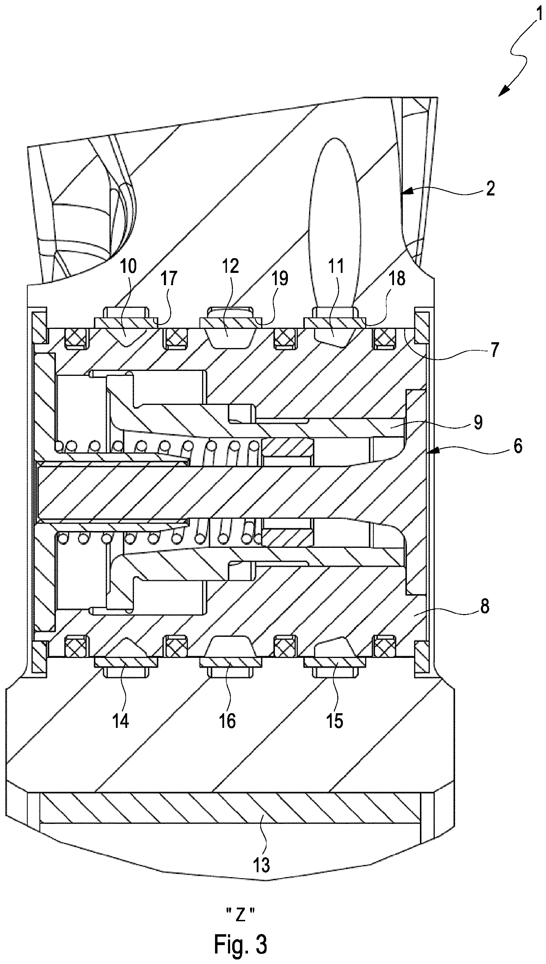

Figur 1 zeigt ein erfindungsgemäßes Pleuel 1 für eine Brennkraftmaschine mit variabler Verdichtung mit einer Exzenter-Verstelleinrichtung 3 zur Verstellung einer effektiven Pleuelstangenlänge mit einem Umschaltventil 6 nach einem ersten Ausführungsbeispiel in Draufsicht mit eingezeichneter Schnittebene A-A. In Figur 2 ist das Pleuel in dem Längsschnitt A-A in Figur 1 mit dem eingezeichneten vergrößerten Ausschnitt Z dargestellt. Figur 3 stellt das Umschaltventil aus Figur 2 im vergrößerten Ausschnitt Z dar.

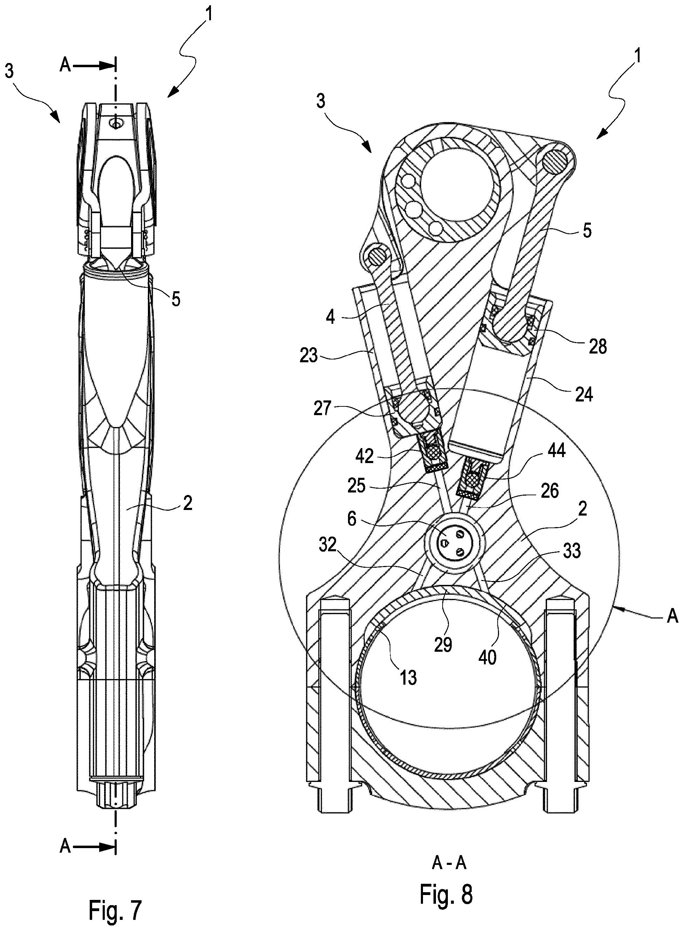

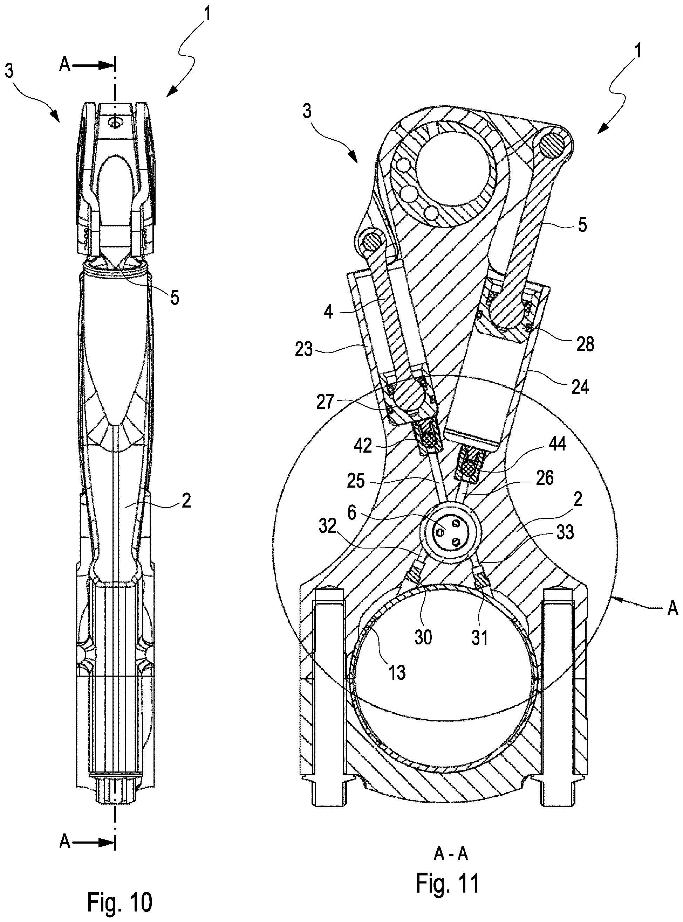

Das Pleuel 1 weist einen Pleuelkörper 2 und eine Exzenter-Verstelleinrichtung 3 mit zwei in Figur 8 und 11 sichtbaren Zylindern 23, 24 als Stützkammern (eine Massenkraftseite (MKS) - Kammer und eine Gaskraftseite (GKS) - Kammer) auf, wobei sowohl jeweils ein Zulauf 25, 26 zum Zuführen von Hydraulikflüssigkeit in die Zylinder 23, 24 über eine Versorgungsleitung 32, 33 als auch jeweils ein Ablauf zum Abführen von Hydraulikflüssigkeit von den Zylindern 23, 24 vorgesehen sind.

Die Exzenter-Verstelleinrichtung 3 kann gemäß der gezeigten, vorteilhaften Ausführungsform zwei Zylinder mit jeweils einem Kolben 27, 28 aufweisen, der in einer Zylinderbohrung verschiebbar geführt und mit einer Stützstange 4, 5 verbunden ist.

Das Umschaltventil 6 ist zum Steuern des Hydraulikflüssigkeitsstroms des Pleuels 1 zur Verstellung der effektiven Pleuelstangenlänge mit der Exzenter-Verstelleinrichtung 3 vorgesehen. Das Umschaltventil 6 umfasst ein Ventilgehäuse 8, das einen ersten Arbeitsanschluss 10 und einen zweiten Arbeitsanschluss 11 sowie einen Versorgungsanschluss 12 aufweist.

Ein in dem Ventilgehäuse 8 beweglicher Kolben 9 ist wahlweise in eine erste oder eine zweite Schaltstellung verlagerbar, wobei in der ersten Schaltstellung der erste Arbeitsanschluss 10 und in der zweiten Schaltstellung der zweite Arbeitsanschluss 11 mit dem Versorgungsanschluss 12 und einer mit einer Lagerschale 13 des Pleuels verbundenen Versorgungsleitung verbunden ist.

Erfindungsgemäß ist vorgesehen, dass in den Pleueln 1 der in den Figuren 1 bis 6 gezeigten Ausführungsbeispiele jeweils ein Filterelement 14, 15, 16 im Bereich der Anschlüsse 10, 11, 12 des Umschaltventils 6 angeordnet ist. Die beiden Filterelemente 14 und 15 sind dabei jeweils dem ersten, bzw. dem zweiten Arbeitsanschluss 10, 11 und das Filterelement 16 ist dem Versorgungsanschluss 12 zugeordnet. Wie in Figur 3 zu erkennen, sind die Filterelemente 14, 15, 16 als einen Außenumfang des Ventilgehäuses 8 umgreifende Ringbänder ausgebildet.

Gemäß dem in den Figuren 1 bis 3 dargestellten Ausführungsbeispiel sind die Filterelemente 14, 15, 16 in Ausnehmungen 17, 18, 19 der Schalterbohrung 7 des Pleuels 1 bzw. des Pleuelkörpers 2 angeordnet. Der gesamte Fluss von Hydraulikflüssigkeit in Richtung Umschaltventil 6 wird dadurch vorteilhaft gefiltert. Das Umschaltventil 6 kann unverändert in seinen äußeren Abmessungen eingesetzt werden.

Die Filterelemente 14, 15, 16 können vorteilhaft als Siebe ausgebildet sein, um Schmutzpartikel in der Hydraulikflüssigkeit abzuhalten.

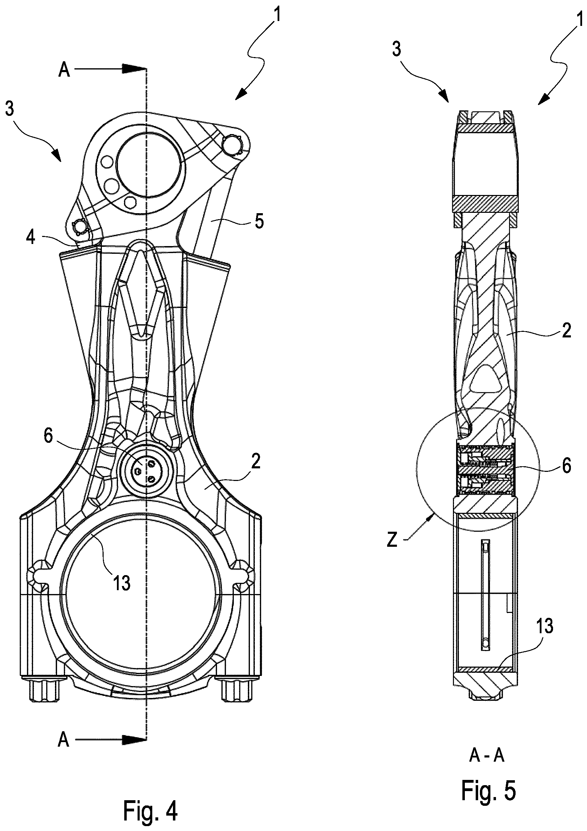

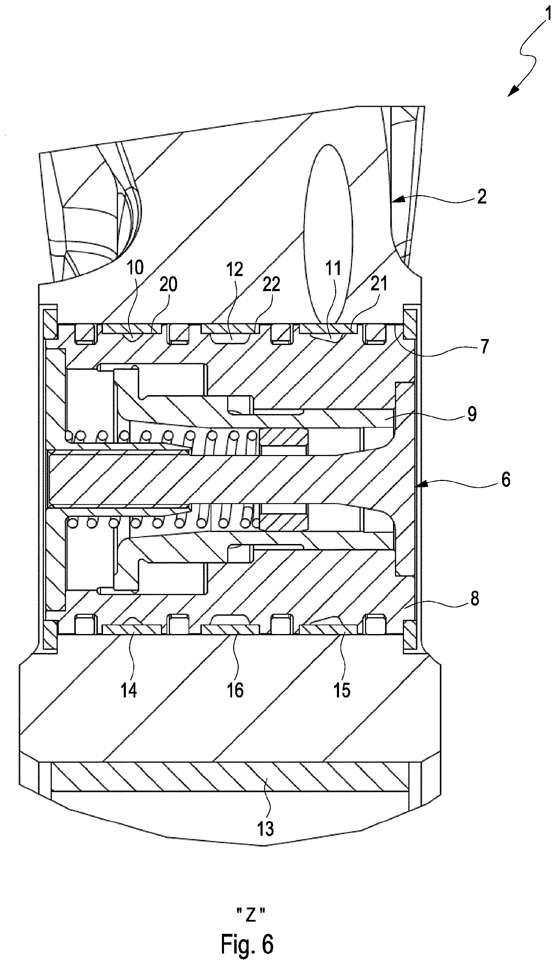

Figur 4 zeigt ein Pleuel 1 mit einem Umschaltventil 6 nach einem weiteren Ausführungsbeispiel der Erfindung in Draufsicht mit eingezeichneter Schnittebene A-A, während Figur 5 das Pleuel 1 in dem Längsschnitt A-A in Figur 4 mit dem eingezeichneten vergrößerten Ausschnitt Z und Figur 6 das Umschaltventil 6 aus Figur 5 im vergrößerten Ausschnitt Z darstellt.

In diesem weiteren Ausführungsbeispiel sind die Filterelemente 14, 15, 16 in Ausnehmungen 20, 21, 22 des Ventilgehäuses 8 angeordnet. Die Filterelemente 14, 15, 16 können vorteilhaft sogar komplett in das Ventilgehäuse 8 integriert sein. Auch bei diesem Ausführungsbeispiel wird der gesamte Fluss von Hydraulikflüssigkeit in Richtung Umschaltventil 6 vorteilhaft gefiltert. Durch die Anordnung der Filterelemente 14 bis 16 im Ventilgehäuse 8 entfällt jedoch eine aufwendige Bearbeitung des Pleuelkörpers 2. Die Schalterbohrung 7 im Pleuelkörper 2 zur Aufnahme des Umschaltventils 6 kann unverändert genutzt werden.

Das in den Figuren 3 und 6 dargestellte Umschaltventil 6 ist als Hydraulikventil in einer Schalterbohrung 7 des Pleuelkörpers 2 angeordnet, beispielsweise eingepresst.

Das Umschaltventil 6 kann wie dargestellt als Hydraulikventil ausgebildet sein. Im Rahmen der Erfindung ist es jedoch auch denkbar, dass das Umschaltventil 6 als ein mechanisches Ventil vorgesehen ist.

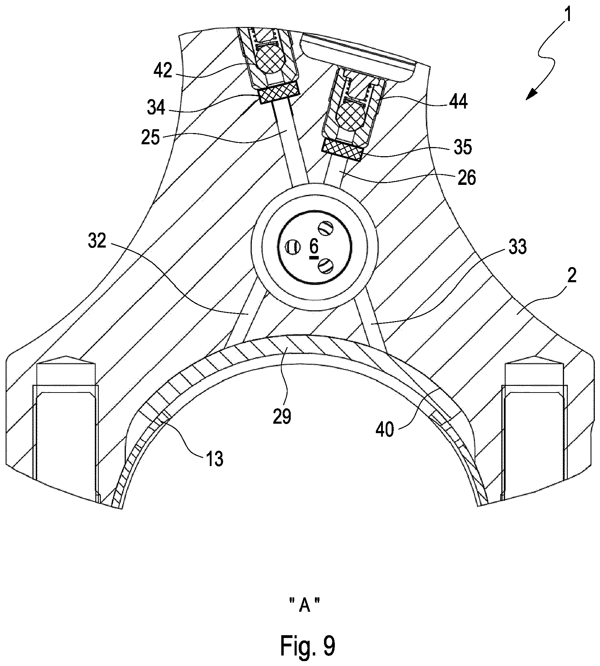

Die Figuren 7 bis 9 zeigen ein weiteres Ausführungsbeispiel der Erfindung. Figur 7 zeigt ein Pleuel 1 mit einem Umschaltventil 6 mit einem Filterelement 29 zwischen Pleuelkörper 2 und Lagerschale 13, in einer Seitenansicht mit eingezeichneter Schnittebene A-A, während Figur 8 das Pleuel 1 in dem Längsschnitt A-A in Figur 7 mit dem eingezeichneten vergrößerten Ausschnitt A darstellt. Figur 9 stellt einen Teil des Pleuels 1 im vergrößerten Ausschnitt A dar.

Gemäß dem Ausführungsbeispiel in den Figuren 7 bis 9 ist erfindungsgemäß vorgesehen, dass zwischen dem Pleuelkörper 2 und der Lagerschale 13 ein Filterelement 29 angeordnet ist. Das Filterelement 29 ist dabei in einer Nut 40 wenigstens auf einem Teil des Umfangs der Lagerschale 13 angeordnet. Vorteilhafterweise wird bei dieser Ausführungsform sämtliche Hydraulikflüssigkeit, die aus der Lagerschale 13 nachgesaugt wird, gefiltert. Durch die Anbringung des Filterelements 29 in einer Nut 40 nur auf einem Teil des Umfangs der Lagerschale 13 ist gewährleistet, dass die Anlagefläche zur Lagerschale 13 möglichst wenig in ihrer Struktur geschwächt wird und so die Traglast der Lagerschale 13 im Wesentlichen erhalten bleibt. Vorteilhaft kann das Filterelement 29 komplett in den Pleuelkörper 2 integriert sein.

In Figur 8 ist weiterhin dargestellt, wie nach einer weiteren Ausführung des Pleuels 1 in dem Zulauf 25, 26 Rückschlagventile 42, 44 vorgesehen sind, wobei zwischen Zulauf 25, 26 und Anschlüssen der Rückschlagventile 42, 44 jeweils ein Filterelement 34, 35 angeordnet ist. Vorteilhaft kann so der Hydraulikflüssigkeitsstrom, der in die Rückschlagventile 42, 44 strömt, zusätzlich wirksam auf Schmutzpartikel gefiltert werden. Für die Filterelemente 34, 35 können beispielsweise feinere Siebe eingesetzt werden, so dass auch kleinere Partikel oder Späne aus der Hydraulikflüssigkeit herausgefiltert werden können. Die beiden Filterelemente 34, 35 vor den Rückschlagventilen 42, 44 stellen jedoch weitere Möglichkeiten dar, die Hydraulikflüssigkeit zu filtern und müssen nicht unbedingt in Kombination mit dem Filterelement 29 zwischen Lagerschale 13 und Pleuelkörper 2 in Zusammenhang eingesetzt werden, sondern können beispielsweise auch zusammen mit den direkt am Umschaltventil 6 angeordneten Filterelementen 14, 15, 16 zusammen verwendet werden.

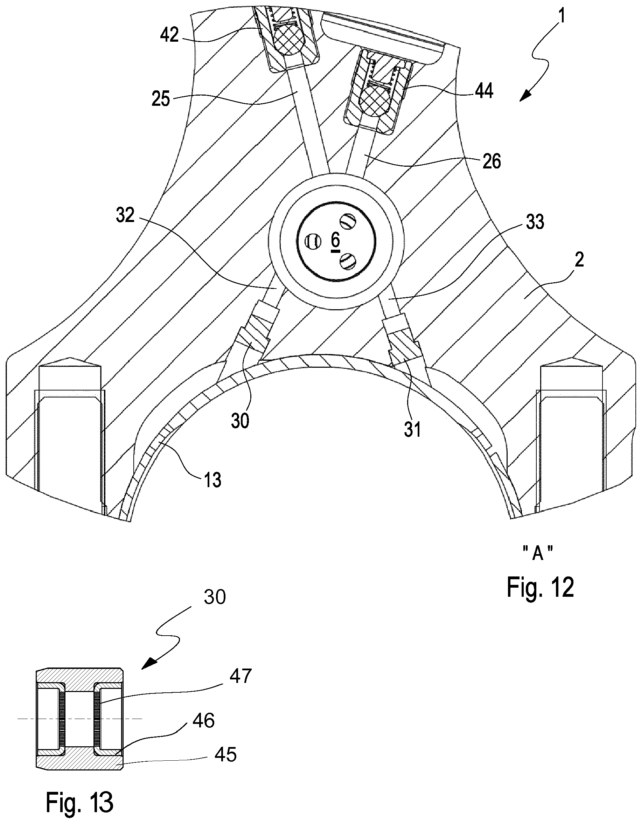

Die Figuren 10 bis 12 zeigen ein weiteres Ausführungsbeispiel der Erfindung. Figur 10 zeigt ein Pleuel 1 mit einem Umschaltventil 6 mit Filterelementen 30, 31 in Versorgungsleitungen 32, 33, in einer Seitenansicht mit eingezeichneter Schnittebene A-A, während Figur 11 das Pleuel 1 in dem Längsschnitt A-A in Figur 10 mit dem eingezeichneten vergrößerten Ausschnitt A darstellt. Figur 12 stellt das Pleuel 1 im vergrößerten Ausschnitt A dar.

Bei dem Ausführungsbeispiel in den Figuren 10 bis 12 sind die Filterelemente 30, 31 dabei in den Versorgungsleitungen 32, 33 angeordnet, welche von der Lagerschale 13 in Richtung Umschaltventil 6 führen. Vorzugsweise ist nur eine einzige Versorgungsleitung 32, 33 mit einem Filterelement 30, 31 von der Lagerschale in Richtung Umschaltventil 6 vorgesehen. Das Filterelement 30, 31 kann vorteilhaft komplett in die Versorgungsleitung 32, 33 integriert sein. Vorteilhafterweise wird bei dieser Ausführungsform sämtliche Hydraulikflüssigkeit, die aus der Lagerschale 13 nachgesaugt wird, gefiltert.

Alternativ kann ein nicht dargestelltes Pleuel mit einer Exzenter-Verstelleinrichtung einen Schwenkmotor umfassen, welcher einen in einem Stator gelagerten Rotor aufweist, wobei zwischen wenigstens einem Rotorflügel des Rotors und wenigstens einem Statorflügel des Stators wenigstens eine erste Stützkammer und wenigstens eine zweite Stützkammer ausgebildet sind, wobei ein Volumen der ersten Stützkammer und ein Volumen der zweiten Stützkammer durch eine Verstellung von Rotor gegen Stator komplementär zueinander veränderbar sind. Erfindungsgemäß können auch bei diesem Ausführungsbeispiel Filterelemente in Versorgungsleitungen angeordnet sind, welche von dem Umschaltventil in Richtung der Stützkammern des Schwenkmotors führen. Vorteilhafterweise wird bei dieser Ausführungsform sämtliche Hydraulikflüssigkeit, die über ein Umschaltventil in Richtung der Stützkammern strömt, wirksam auf Schmutzpartikel in der Hydraulikflüssigkeit gefiltert.

Die Filterelemente 14, 15, 16, 29, 30, 31, 34, 35, welche in den in den Figuren 1 bis 12 dargestellten Ausführungsbeispielen eingesetzt werden, können vorteilhaft als Sieb ausgebildet sein. Als Siebe können dabei beispielsweise ein umspritztes Drahtmaschengewebe, ein umspritztes, gelochtes Blechteil, ein gelochtes Blechteil oder auch ein tiefgezogenes Blechteil zum Einsatz kommen.

Die erfindungsgemäßen Filterelemente 14, 15, 16, 29, 30, 31, 34, 35 können auch vorteilhaft beispielsweise Papierfilter, Metallgewebefilter, Sinterbronze, Vliesmaterial, Kunststoffgewebe oder ähnliche Materialien umfassen.

Die Filterelemente 14, 15, 16, 29, 30, 31, 34, 35 können in ihre jeweilige Aufnahme im Umschaltventil 6, bzw. im Pleuelkörper 2 beispielsweise eingelegt, eingeclipst oder eingepresst angeordnet sein.

Die Filterelemente 14, 15, 16, 29, 30, 31, 34, 35 können vorteilhaft als Lebensdauerbauteil vorgesehen sein, brauchen als während ihres Filtereinsatzes nicht gewechselt werden.

Den Filterelementen 14, 15, 16, 29, 30, 31, 34, 35 der verschiedenen Ausführungsbeispiele ist jedoch gemein, dass sie jeweils allein oder in Kombination mit anderen Filterelementen an oder in dem Pleuel 1 zum Einsatz kommen können, um die eingesetzte Hydraulikflüssigkeit wirksam auf Partikel oder Späne zu filtern und so empfindliche mechanische Bauteile wie Umschaltventile und/oder Rückschlagventile vor Schädigung oder Ausfall zu bewahren.

Figur 13 zeigt ein mögliches Ausführungsbeispiel eines Filterelementes 30 bzw. 31, welches in einem in den Figuren 10 bis 12 gezeigten Pleuel 1 Verwendung finden kann. Das Filterelement 30 umfasst eine Buchse 45, in welche zwei Siebeinsätze 46 eingebracht sind. Vorzugsweise sind die Siebeinsätze 46 als Tiefziehteile ausgebildet, wobei Löcher 47 beispielsweise mittels Laser eingebracht werden können. Die Buchse 45 kann mittels einer Presspassung verliersicher in dem Pleuel 1 angeordnet werden. Alternativ kann die Buchse 45 in das Pleuel 1 eingeschraubt bzw. eingeschweißt werden.

## Patentansprüche

1. Pleuel (1) für eine Brennkraftmaschine mit variabler Verdichtung mit einem Pleuelkörper (2) mit einem Umschaltventil (6) und einer Exzenter-Verstelleinrichtung (3) zur Verstellung einer effektiven Pleuelstangenlänge, wobei die Exzenter-Verstelleinrichtung (3) zwei Zylinder (23, 24) als Stützkammern aufweist und wobei sowohl jeweils ein Zulauf (25, 26) zum Zuführen von Hydraulikflüssigkeit in die Zylinder (23, 24) über wenigstens eine mit einer Lagerschale (13) des Pleuels verbundenen Versorgungsleitung (32, 33) als auch jeweils ein Ablauf zum Abführen von Hydraulikflüssigkeit von den Zylindern (23, 24) vorgesehen sind,
**dadurch gekennzeichnet,**
**dass** zwischen dem Pleuelkörper (2) und der Lagerschale (13) oder dem Pleueldeckel und der Lagerschale (13) wenigstens ein Filterelement (29) angeordnet ist;
und/oder
**dass** Filterelemente (30, 31) in den Versorgungsleitungen (32, 33) angeordnet sind, welche die Lagerschale (13) mit dem Umschaltventil (6) verbinden.

2. Pleuel nach Anspruch 1, wobei das Filterelement (29) in einer Nut (40) wenigstens auf einem Teil des Umfangs der Lagerschale (13) angeordnet ist.

3. Pleuel nach Anspruch 1 oder 2, wobei das Filterelement (29) in den Pleuelkörper (2) integriert ist.

4. Pleuel nach einem der vorhergehenden Ansprüche, wobei das Filterelement (30, 31) in die Versorgungsleitung (32, 33) integriert ist.

5. Pleuel nach einem der vorergehenden Ansprüche, **dadurch gekennzeichnet, dass** das Umschaltventil (6) ein Ventilgehäuse (8) aufweist, das einen ersten Arbeitsanschluss (10) und einen zweiten Arbeitsanschluss (11) sowie einen Versorgungsanschluss (12) aufweist, wobei wenigstens ein Filterelement (14, 15, 16) im Bereich der Anschlüsse (10, 11, 12) des Umschaltventils angeordnet ist.

6. Pleuel nach Anspruch 5, **dadurch gekennzeichnet, dass** der erste Arbeitsanschluss (10), der zweite Arbeitsanschluss (11) sowie der Versorgungsanschluss (12) jeweils ein Filterelement (14, 15, 16) aufweisen.

7. Pleuel nach einem der vorergehenden Ansprüche, **gekennzeichnet durch** eine Ausgestaltung als Hydraulikventil oder als mechanisches Umschaltventil.

8. Pleuel nach einem der vorhergehenden Ansprüche, **dadurch gekennzeichnet, dass** die Filterelemente (14, 15, 16) in Ausnehmungen (20, 21, 22) des Ventilgehäuses (8) angeordnet sind.

9. Pleuel nach einem der vorhergehenden Ansprüche, **dadurch gekennzeichnet, dass** die Filterelemente (14, 15, 16) als Siebe ausgebildet sind.

10. Pleuel nach einem der vorhergehenden Ansprüche, **dadurch gekennzeichnet, dass** die Filterelemente (14, 15, 16) als einen Außenumfang des Ventilgehäuses (8) umgreifende Ringbänder ausgebildet sind.

11. Pleuel nach einem der vorhergehenden Ansprüche, **dadurch gekennzeichnet, dass** die Filterelemente (14, 15, 16) in das Ventilgehäuse (8) integriert sind.

## Claims

1. Connecting rod (1) for an internal combustion engine with variable compression, having a connecting rod body (2) with a switching valve (6) and an eccentric adjusting device (3) for adjusting an effective connecting rod length, wherein the eccentric adjusting device (3) has two cylinders (23, 24) as supporting chambers and wherein both in each case an inlet (25, 26) for supplying hydraulic fluid into the cylinders (23, 24) via at least one supply line (32, 33) connected to a bearing shell (13) of the connecting rod and in each case an outlet for removing hydraulic fluid from the cylinders (23, 24) are provided,
**characterized**
**in that** at least one filter element (29) is arranged between the connecting rod body (2) and the bearing shell (13) or the connecting rod cover and the bearing shell (13);
and/or
**in that** filter elements (30, 31) are arranged in the supply lines (32, 33) which connect the bearing shell (13) to the switching valve (6).

2. Connecting rod according to Claim 1, wherein the filter element (29) is arranged in a groove (40) at least on a part of the circumference of the bearing shell (13).

3. Connecting rod according to Claim 1 or 2, wherein the filter element (29) is integrated into the connecting rod body (2).

4. Connecting rod according to one of the preceding claims, wherein the filter element (30, 31) is integrated into the supply line (32, 33).

5. Connecting rod according to one of the preceding claims, **characterized in that** the switching valve (6) has a valve housing (8) which has a first working port (10) and a second working port (11) and also a supply port (12), wherein at least one filter element (14, 15, 16) is arranged in the region of the ports (10, 11, 12) of the switching valve.

6. Connecting rod according to Claim 5, **characterized in that** the first working port (10), the second working port (11) and also the supply port (12) each have a filter element (14, 15, 16).

7. Connecting rod according to one of the preceding claims, **characterized by** a configuration as hydraulic valve or as mechanical switching valve.

8. Connecting rod according to one of the preceding claims, **characterized in that** the filter elements (14, 15, 16) are arranged in recesses (20, 21, 22) of the valve housing (8).

9. Connecting rod according to one of the preceding claims, **characterized in that** the filter elements (14, 15, 16) are designed as screens.

10. Connecting rod according to one of the preceding claims, **characterized in that** the filter elements (14, 15, 16) are designed as annular strips which engage around an outer circumference of the valve housing (8).

11. Connecting rod according to one of the preceding claims, **characterized in that** the filter elements (14, 15, 16) are integrated into the valve housing (8) .

## Revendications

1. Bielle (1) pour un moteur à combustion interne à compression variable avec un corps de bielle (2) avec une soupape d'inversion (6) et un dispositif de réglage excentrique (3) pour le réglage d'une longueur de bielle effective, dans laquelle le dispositif de réglage excentrique (3) présente deux cylindres (23, 24) comme chambres de soutien et dans laquelle il est prévu aussi bien chaque fois une arrivée (25, 26) pour amener du liquide hydraulique dans les cylindres (23, 24) via au moins une conduite d'alimentation (32, 33) raccordée à une coquille de palier (13) de la bielle que chaque fois aussi une évacuation pour évacuer du liquide hydraulique des cylindres (23, 24), **caractérisée en ce qu'**au moins un élément filtrant (29) est disposé entre le corps de bielle (2) et la coquille de palier (13) ou entre le chapeau de bielle et la coquille de palier (13);
et/ou
**en ce que** des éléments filtrants (30, 31) sont disposés dans les conduites d'alimentation (32, 33), qui relient la coquille de palier (13) à la soupape d'inversion (6) .

2. Bielle selon la revendication 1, dans laquelle l'élément filtrant (29) est disposé dans une rainure (40) au moins sur une partie de la périphérie de la coquille de palier (13).

3. Bielle selon une revendication 1 ou 2, dans laquelle l'élément filtrant (29) est intégré dans le corps de bielle (2).

4. Bielle selon l'une quelconque des revendications précédentes, dans laquelle l'élément filtrant (30, 31) est intégré dans la conduite d'alimentation (32, 33).

5. Bielle selon l'une quelconque des revendications précédentes, **caractérisée en ce que** la soupape d'inversion (6) présente un boîtier de soupape (8), qui présente un premier raccord de travail (10) et un deuxième raccord de travail (11) ainsi qu'un raccord d'alimentation (12), dans laquelle au moins un élément filtrant (14, 15, 16) est disposé dans la région des raccords (10, 11, 12) de la soupape d'inversion.

6. Bielle selon la revendication 5, **caractérisée en ce que** le premier raccord de travail (10), le deuxième raccord de travail (11) ainsi que le raccord d'alimentation (12) présentent respectivement un élément filtrant (14, 15, 16).

7. Bielle selon l'une quelconque des revendications précédentes, **caractérisée par** une configuration comme soupape hydraulique ou comme soupape d'inversion mécanique.

8. Bielle selon l'une quelconque des revendications précédentes, **caractérisée en ce que** les éléments filtrants (14, 15, 16) sont disposés dans des évidements (20, 21, 22) du boîtier de soupape (8).

9. Bielle selon l'une quelconque des revendications précédentes, **caractérisée en ce que** les éléments filtrants (14, 15, 16) sont formés par des tamis.

10. Bielle selon l'une quelconque des revendications précédentes, **caractérisée en ce que** les éléments filtrants (14, 15, 16) sont formés par des bandes annulaires entourant une périphérie extérieure du boîtier de soupape (8).

11. Bielle selon l'une quelconque des revendications précédentes, **caractérisée en ce que** les éléments filtrants (14, 15, 16) sont intégrés dans le boîtier de soupape (8).
